# FASCICULE DE BREVET EUROPEEN

(11) **EP 3 692 778 B1**
(45) Date de publication et mention de la délivrance du brevet: **07.07.2021**
(21) Numéro de dépôt: 20155778.2
(22) Date de dépôt: 06.02.2020
(51) Int. Cl.: A01C 17/00

(54) **DISPOSITIF DE DOSAGE DE PARTICULES À ÉPANDRE À BOISSEAU ROTATIF, ET MACHINE AGRICOLE CORRESPONDANTE**
DOSIERVORRICHTUNG FÜR ÜBER EINEN DREHHAHN ZU VERTEILENDE PARTIKEL, UND ENTSPRECHENDE LANDWIRTSCHAFTLICHE MASCHINE
DEVICE FOR DISPENSING PARTICLES FOR SPREADING WITH ROTARY SLIDE VALVE, AND CORRESPONDING AGRICULTURAL MACHINE

(30) Priorité: 07.02.2019 FR 1901211
(43) Date de publication de la demande: 12.08.2020
(73) Titulaire: Burel Production, 35220 Chateaubourg (FR)
(72) Inventeur: ARRIBARD, Gwennvel, 35000 Rennes (FR); LEVEILLE, Lionel, 35500 Vitré (FR)
(74) Mandataire: Vidon Brevets & Stratégie

(56) Documents cités:
- EP-A1- 0 183 292
- EP-A2- 0 298 549
- US-A- 1 907 773

## Description

### Domaine technique

Le domaine de l'invention est celui de l'épandage de particules, dans le domaine de l'agriculture, ou de produits se présentant sous la forme de grains, tels que des engrais ou des semences. Plus précisément, l'invention concerne le dosage des particules à épandre, dans un contexte d'agriculture de précision.

Elle s'applique notamment, mais non exclusivement, aux épandeurs centrifuges qui mettent en œuvre un ou plusieurs disques mobiles en rotation. Elle trouve également application dans le domaine des semoirs.

### Art antérieur

Dans de telles machines agricoles, le produit à épandre est généralement stocké dans une trémie, dans la paroi de laquelle est ménagée une ouverture, destinée à l'écoulement de l'engrais ou de la semence.

Ainsi, dans les épandeurs centrifuges, le produit à épandre est déversé depuis la trémie au-dessus de chaque disque, de façon à être projeté par l'intermédiaire des pales sur le terrain sur lequel il doit être déposé. Un exemple de cette approche est décrit dans le document de brevet EP 0 170 605.

Selon les besoins, la quantité de particules délivrées sur un disque par unité de temps peut varier, par exemple d'une proportion de 1 à 400. Une méthode classique pour le calcul des consignes d'épandage repose sur la formule D = QLV / 600, où :
- D est le débit instantané d'alimentation des disques (en kg/min) pour une unité de temps donnée, correspondant à un cycle d'épandage ;
- Q est la dose consigne (en kg/ha), correspondant à la moyenne des consignes Qᵢ requises pour chaque maille présente dans une surface donnée associée à un cycle d'épandage ;
- la surface donnée est un rectangle défini par :
- la largeur L de d'épandage (en m) et
- la distance parcourue pendant un cycle d'épandage : Vxt, où V est la vitesse du tracteur (en km/h), et t la durée d'un cycle d'épandage (en h).

Dans la mesure où la dose consigne Q varie beaucoup pour des raisons agronomiques, où la vitesse V varie beaucoup en fonction du relief, et où la largeur L varie en fonction de la position de la machine agricole dans le champ (notamment en fourrière, en bordure, en bout ou en pointe de champ), il est nécessaire que le débit D puisse varier fortement, et de façon très réactive.

En effet, dans le cadre de l'agriculture de précision, ces variations peuvent être permanentes, ou quasi permanentes. En effet, le système d'épandage connaît sa position précise, par exemple à l'aide d'un positionnement par GPS. Il connaît par ailleurs le besoin en engrais de la zone correspondante, par exemple à partir de cartes élaborées précédemment. En conséquence, en cours d'épandage, sans que l'épandage soit interrompu et sans intervention de l'agriculteur, le système peut décider de modifier la dose de particules délivrées. Selon une autre approche, l'agriculteur peut lui-même contrôler manuellement cette dose, à l'aide de moyens de réglage prévu à cet effet dans la cabine de son tracteur.

Ainsi, dans le domaine de l'épandage comme dans celui des semoirs, il est important de pouvoir réguler le débit d'écoulement gravitaire des particules à épandre au sortir de la trémie, de façon très précise et très réactive sur une grande plage.

Chez la plupart des constructeurs de distributeurs d'engrais, une telle régulation se fait au moyen d'une trappe coulissante disposée au fond de la trémie. Plus précisément, la trémie est équipée, dans sa partie inférieure, d'un réceptacle en plastique ou en inox, également appelé fond doseur (en anglais « hopper bottom »), dans lequel sont ménagées une ou plusieurs ouvertures. Ces ouvertures planes, disposées sur une surface horizontale du fond doseur, peuvent être obturées totalement ou partiellement au moyen d'une trappe coulissante. Le débit d'écoulement gravitaire des particules à épandre est donc régulé, en fonction de la position de la trappe, et donc de la surface de passage des particules à épandre au travers de l'ouverture.

Cette solution présente l'avantage d'offrir un débit d'écoulement gravitaire maximisé, pour une section d'ouverture donnée du fond doseur. En outre, un tel système de dosage est particulièrement compact.

Elle présente cependant également plusieurs inconvénients.

Tout d'abord, la trappe d'obturation de l'ouverture coulisse entre deux guides dans un environnement chargé en poussières et particules : elle est donc sensible à l'encrassement et risque de se coincer, en fonctionnement.

En outre, la localisation de la trappe, sur la surface horizontale inférieure du fond doseur, rend difficile l'accès à cette dernière, pour procéder à son nettoyage, en cas d'encrassement.

Enfin, cette solution est sensible au chargement de la trémie, du fait de la masse du produit, qui exerce une force gravitaire verticale sur une surface de trappe horizontale : la résultante de force exercée sur la trappe est d'autant plus forte que la masse de produit dans la trémie est élevée.

La solution adoptée à ce jour par le Demandeur de la présente demande de brevet consiste quant à elle en un fond en inox à embase rectangulaire, sensiblement en forme de tronc de pyramide, disposé en extrémité inférieure de la trémie. Une trappe oblique coulisse pour obturer en tout ou partie une ouverture en forme de trapèze, ménagée dans une paroi latérale du fond.

Si cette solution donne des résultats satisfaisants, elle pose au Demandeur des difficultés d'étanchéité, liées à la déformation possible de la planéité de la trappe sous la charge des particules à épandre. Elle pose aussi des problèmes d'encombrement, si l'on considère l'encombrement cumulé de la trappe et de la zone d'ouverture qu'elle obture. Un agrandissement de cette zone d'ouverture s'accompagne nécessairement d'un agrandissement équivalent de la trappe d'obturation, et donc un doublement de l'encombrement total.

En outre, il est important pour le Demandeur d'offrir une solution de dosage permettant encore d'améliorer la précision de la régulation de l'écoulement des particules à épandre à faible débit, et notamment d'obtenir un écoulement stable à faible débit. Enfin, toutes les solutions connues de l'art antérieur souffrent d'un manque de polyvalence. En effet, les types de particules à épandre sont très variés en formes et en dimensions (engrais ou semences de formes sphériques de diamètre 2 à 5 mm ; pellets de formes cylindriques de diamètres de 3 à 6 mm et de longueur de 8 à 15 mm ; microproduits sphériques de diamètre 1mm, de formes et dimensions assimilables à des grains de sable). Il existe par ailleurs de très fortes variations de densités de ces différents produits à épandre.

Les solutions de l'art antérieur existantes sont toutes des épandeurs gravitaires, dont le débit est directement lié à la densité des particules à épandre, ce qui entraîne un manque de polyvalence de ces derniers.

On connaît enfin des documents de brevet EP 0 183 292 A1 et EP 0 298 549 A2 une solution selon laquelle une trémie de stockage se termine en sa partie inférieure par un bol sphérique dans lequel sont ménagées deux ouvertures destinées au passage des particules à épandre. Ces deux ouvertures peuvent être ouvertes ou fermées ensemble par une trappe sphérique qui coulisse le long de la paroi extérieure du bol convexe, par rotation autour d'un axe sensiblement horizontal (quand l'épandeur est horizontal), disposé dans la trémie.

Cette solution, intéressante en termes d'encombrement, manque également de polyvalence, et ne permet notamment pas de couvrir avec précision l'ensemble de la plage de débits d'alimentation requise aujourd'hui pour une agriculture de précision. Notamment une telle solution manque de précision, tant pour les très gros débits d'écoulement, que pour les débits les plus faibles. En effet, à faible débit, la géométrie de l'ouverture et de la trappe d'obturation ne permet pas d'assurer un écoulement gravitaire satisfaisant, notamment pour les particules les plus fines.

Il existe donc un besoin d'une technique de dosage de particules à épandre améliorée par rapport à ces diverses solutions antérieures. Il existe notamment un besoin d'une telle technique de dosage, qui permette d'obtenir une excellente précision du débit d'écoulement à faible débit (par exemple 1kg/min), tout en permettant également d'atteindre des débits d'écoulement élevés (par exemple 300kg/min).

Il existe également un besoin d'un dispositif de dosage qui soit précis, réactif, facile d'entretien, compact, et qui convienne au dosage de tous types de particules à épandre, quelle que soit la courbe de débit optimale associée.

### Exposé de l'invention

L'invention répond à ce besoin en proposant un dispositif de dosage de particules à épandre pour machine agricole, comprenant un fond destiné à former partie inférieure d'une trémie de stockage desdites particules de ladite machine agricole, avec les caractéristiques de la revendication 1.

Un tel fond comprend une paroi latérale présentant au moins une ouverture destinée au passage des particules à épandre au travers d'au moins un orifice calibré ; une trappe incurvée est mobile en rotation autour d'un axe sensiblement horizontal entre une position d'obturation de l'ouverture et une position de libération maximale de l'ouverture. En outre, un tel axe est disposé à l'extérieur du fond et de la trémie.

Ainsi, l'invention repose sur une approche tout à fait nouvelle et inventive du dosage de particules à épandre pour semoir ou épandeur d'engrais. En effet, contrairement aux solutions de l'art antérieur qui reposent pour la plupart sur la mise en œuvre d'ouvertures planes, obturées par des trappes planes coulissantes ou pivotantes, en fond de trémie, la solution de l'invention propose de ménager une (ou plusieurs) ouverture dans une paroi latérale du fond, et de l'obturer par une trappe incurvée rotative.

On notera que par fond, on entend aussi bien un réceptacle ou contenant solidarisé à la trémie dans sa partie inférieure, par exemple par soudure, que la partie inférieure de la trémie elle-même dans une solution intégrée. Un tel fond doseur est également appelé bol (ou en anglais « hopper bottom »). Le dispositif de dosage selon l'invention comprend un tel fond doseur, et la ou les trappe(s) incurvée(s) rotative(s) prévue(s) pour obturer la ou les ouverture(s) ménagée(s) dans l'une de ses parois latérales.

Comme on le verra plus en détail par la suite, la trappe incurvée peut présenter une courbure dans une ou deux dimensions, et prendre la forme d'une portion de cylindre (ou boisseau) ou d'une portion de sphère.

De plus, contrairement à la solution de l'art antérieur décrite dans le document de brevet EP 0 183 292, l'axe de rotation de cette trappe incurvée est disposé à l'extérieur du fond et de la trémie. Ainsi, ce boisseau convexe pénètre à l'intérieur du fond, dont l'ouverture présente une forme complémentaire concave.

L'emploi d'une telle trappe incurvée offre de nombreux avantages au dispositif de dosage de la présente invention. Elle permet notamment, par rapport à une trappe plane de l'art antérieur, de réduire le débit d'écoulement gravitaire des particules à épandre en position d'ouverture minimale de l'orifice de passage des particules, et d'augmenter ce même débit en position d'ouverture maximale de l'orifice. Elle permet également, pour un encombrement donné, d'accroître la section de passage des particules au travers de l'ouverture, et de favoriser un écoulement continu du produit à épandre à faible débit.

En outre, la forme incurvée de la trappe s'oppose à la pression du produit à épandre contenu dans la trémie, ce qui limite les déformations de celle-ci, et par conséquent les risques de fuite, de coincement et de casse, et d'imprécision. En effet, une telle forme incurvée (cylindrique ou sphérique) offre une meilleure résistance à la flexion qu'une plaque plane, grâce à un moment quadratique plus adapté.De plus, l'axe de rotation de la trappe est placé à l'extérieur du contenant, de préférence à proximité de l'ouverture qu'elle obture. Ainsi, en position d'ouverture maximale, on obtient une surface normale à l'écoulement gravitaire moyen des particules qui est sensiblement horizontale (si l'épandeur est horizontal), ce qui maximise le débit en grosse ouverture ; à l'inverse, en position d'ouverture minimale de la trappe, on obtient une surface normale à l'écoulement gravitaire moyen des particules qui est sensiblement verticale (si l'épandeur est horizontal), ce qui minimise le débit en faible ouverture.

Ainsi le flux de produit reste suffisamment compact pour pouvoir être capté et canalisé par la goulotte d'épandage, quel que soit le débit des particules à épandre.

Selon une caractéristique avantageuse, un tel axe est disposé sensiblement à la verticale d'une frontière haute de l'ouverture. Ainsi, le moyeu (formant le centre du boisseau ou de la trappe) est alors astucieusement placé pour canaliser le produit en pleine ouverture, sa surface, en position d'ouverture maximale, formant moyen de guidage du flux de particules.

Selon une autre caractéristique avantageuse, un tel axe est disposé sensiblement à l'horizontale d'une frontière basse de ladite ouverture. Ainsi, les particules coulissent le long de la paroi de la trappe, qui les guide en un écoulement sensiblement vertical à l'intérieur du fond.

En d'autres termes, lorsque la trappe est en position de libération maximale de l'ouverture, on obtient une surface normale à la surface moyenne d'écoulement du flux de particules qui est sensiblement horizontale, ce qui maximise le débit et améliore la réactivité ; lorsque la trappe est en position de libération minimale de l'ouverture, on obtient une surface normale à la surface moyenne d'écoulement du flux de particules qui est sensiblement verticale, ce qui minimise le débit et permet d'abaisser le seuil d'écoulement minimal de particules.

Afin d'accentuer cet effet de guidage en position de libération maximale de l'ouverture, la trappe porte avantageusement un déflecteur apte à canaliser le passage des particules à épandre au travers du ou des orifice(s) calibré(s). Ainsi, le bord du boisseau rotatif ne perturbe pas l'écoulement des particules, mais le canalise au contraire ; de cette façon, le flux de produit reste suffisamment compact pour pouvoir être capté et canalisé par la goulotte d'épandage. Un tel déflecteur peut être formé intégralement dans la trappe, ou consister en une pièce rapportée sur cette dernière. Il évite avantageusement le débordement des particules, et permet de les canaliser, au travers de l'orifice calibré, vers le point de chute souhaité sur les disques d'épandage de la machine agricole, tout en minimisant l'encombrement du système.

Selon un autre aspect, une telle trappe se déplace entre la position d'obturation et la position de libération maximale sur une plage angulaire d'au moins 65°, de préférence d'au moins 70°. Une telle amplitude de déplacement entre la position d'obturation de l'ouverture et sa positon de libération maximale permet d'atteindre des débits de particules élevés.

Selon une caractéristique de l'invention, l'un au moins desdits orifices calibrés présente une largeur variant progressivement. On notera que la largeur s'entend ici comme la dimension horizontale (variation "du bas vers le haut"). Ainsi, dans un mode de réalisation, la section de passage des particules à épandre au travers de l'orifice calibré augmente progressivement du bas de l'ouverture vers le haut de cette dernière. Dans un autre mode de réalisation, un tel orifice calibré présente sensiblement une forme de triangle, dont une pointe est disposée vers le bas, et une base vers le haut, de sorte qu'une section de l'orifice calibré augmente progressivement du bas vers le haut.

La combinaison avantageuse de la forme incurvée de la trappe rotative et de la variation progressive de la largeur de l'orifice calibré permet d'obtenir une courbe de pilotage du débit d'écoulement gravitaire parabolique. Un tel type de courbe de pilotage parabolique privilégie la précision en petit débit et la réactivité en gros débit. L'alliance de ces deux aptitudes offre donc au dispositif de dosage de l'invention une forte polyvalence, par rapport aux solutions de l'art antérieur.

Selon un aspect, un tel dispositif de dosage comprend un sélecteur de débit formant interface entre l'ouverture et la trappe, et portant ledit au moins un orifice calibré.

Un tel sélecteur de débit se présente par exemple sous la forme d'une plaque incurvée, en métal ou en plastique, dans laquelle est(sont) ménagé le ou les orifice(s) calibré(s). Cette plaque est positionnée entre l'ouverture ménagée dans la paroi latérale du fond et sa trappe d'obturation. Elle permet, en fonction de la forme de l'orifice calibré qu'elle porte, de sélectionner une plage de débits d'écoulement possible pour le dispositif de dosage.

Ainsi, on dispose, grâce à un tel dispositif, de deux degrés de liberté pour ajuster le débit d'écoulement des particules à épandre. D'une part, le débit d'écoulement peut être ajusté en fonction de la position de la trappe rotative incurvée, et de son degré d'obturation de l'ouverture ménagée dans le fond. D'autre part, il peut également être ajusté en fonction de la forme de l'orifice calibré que l'on interface entre la trappe rotative et cette ouverture. Par exemple, un sélecteur de débit portant un orifice calibré prenant la forme d'une fine fente verticale est très avantageux à petit débit.

Selon un autre aspect, un tel dispositif de dosage comprend des moyens de fixation amovible du sélecteur de débit. Selon encore un autre aspect, au moins deux sélecteurs de débit, présentant des orifices calibrés différents, sont disponibles et peuvent être interchangés.

Ainsi, il est possible d'équiper le dispositif de dosage de plusieurs sélecteurs de débit distincts, en fonction par exemple du type de produit à épandre, et donc de la plage de débits d'écoulement à viser. Le système est ainsi évolutif, et peut s'adapter finement à l'utilisation que souhaite en faire le client. Un sélecteur de débit présentant un orifice calibré de faible section pourra être utilisé pour atteindre de faibles débits d'écoulement de semences par exemple, tandis qu'un sélecteur de débit présentant un orifice calibré de grande section sera avantageux pour l'épandage d'engrais en pellets.

Selon une autre caractéristique, le sélecteur de débit porte au moins deux orifices calibrés différents et il est monté mobile par rapport à l'ouverture entre une première position dans laquelle un premier orifice calibré est en regard de l'ouverture et au moins une deuxième position dans laquelle un deuxième orifice calibré est en regard de l'ouverture.

Dans cette variante, le sélecteur de débit peut être monté mobile en translation ou en rotation devant l'ouverture de passage des particules, et porter plusieurs orifices calibrés de sections distinctes : le déplacement du sélecteur de débit permet de mettre l'orifice calibré approprié à l'utilisation visée par le client en regard de l'ouverture de passage des particules à épandre.

Selon une autre caractéristique, le sélecteur de débit porte au moins un marqueur d'identification de l'orifice calibré. Un tel marqueur d'identification peut prendre la forme d'une étiquette d'identification radiofréquence passive de type RFID, ou encore d'un aimant ou un capteur moulé dans le sélecteur de débit, ou encore une simple distinction visuelle, par exemple un marquage de couleur.

Grâce à un tel marquage de couleur, il est plus facile, pour l'utilisateur de reconnaître l'orifice calibré installé ou à installer sur le dispositif de dosage. Sous certaines formes et modes de réalisation, un tel marqueur permet une reconnaissance automatique, par la machine agricole, de l'orifice calibré utilisé, et donc une automatisation de la sélection de la courbe de régulation de débit correspondante, qui doit être utilisée pour le pilotage de la machine agricole. Une intervention manuelle de l'utilisateur pour sélectionner la courbe de pilotage la plus adaptée n'est ainsi plus nécessaire, ce qui réduit fortement les risques d'erreurs, et améliore la précision de l'épandage. Dans le cas où le marqueur d'identification est une simple distinction visuelle de type marquage de couleur, la reconnaissance automatique peut se faire au moyen d'une caméra. Selon un autre aspect, un actionneur rotatif (moteur ou vérin) pilote le passage de la trappe de la position d'obturation à la position de libération maximale et inversement. Selon encore un autre aspect, la trappe et l'actionneur rotatif sont disposés à l'extérieur du fond, ce qui améliore leur accessibilité pour le nettoyage et la maintenance.

Selon encore un autre aspect, la trappe incurvée présente une surface définissant sensiblement une portion d'une surface de révolution autour de l'axe horizontal. Comme indiqué précédemment, il peut s'agir d'une portion d'une surface cylindrique ou sphérique.

Selon encore un autre aspect, la paroi latérale présente, dans une zone portant l'ouverture, une surface complémentaire à la surface de révolution de la trappe. A nouveau, cette surface peut donc être une portion de cylindre ou de sphère.

Selon un autre aspect, un tel dispositif de dosage comprend un module de détection de contact entre la trappe et l'ouverture et/ou le sélecteur de débit, et un module d'émission d'une commande d'arrêt de l'actionneur rotatif en cas d'absence de contact détectée. Il est ainsi possible de passer en mode sécurité, et d'arrêter tout déplacement de la trappe incurvée rotative, dès que l'on détecte que le fond doseur est ouvert. On évite ainsi tout accident lorsque l'utilisateur est en train de manipuler le dispositif de dosage, par exemple pour changer le sélecteur de débit, ou pour une opération de nettoyage ou de maintenance.

L'invention concerne également une machine agricole pour l'épandage ou le semis de particules, comprenant une trémie de stockage des particules, et un dispositif de dosage tel que décrit précédemment, disposé en partie inférieure de ladite trémie.

Selon une caractéristique particulière, lorsque le dispositif de dosage comprend un marqueur d'identification de l'orifice calibré, une telle machine agricole comprend un module de lecture de ce marqueur d'identification de l'orifice calibré et un module de sélection d'un mode de pilotage de la machine, adapté à l'orifice calibré identifié.

Un tel module de lecture comprend par exemple une antenne active, apte à émettre un signal radiofréquence vers une étiquette d'identification radiofréquence passive disposée à proximité de l'orifice calibré, et à recevoir les signaux reçus de cette dernière : il identifie alors l'orifice calibré présent en regard de l'ouverture de passage des particules. A partir de cette information d'identification, le terminal en cabine ou le boîtier de pilotage électronique sélectionne automatiquement la courbe de débit associée à l'orifice calibré identifié, et l'utilise pour le pilotage de la machine, sans risque d'erreur.

En variante, un tel module de lecture comprend un capteur magnétique coopérant avec un aimant ou un élément métallique présent sur le sélecteur de débit.

### Présentation des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
[Fig 1] illustre une machine agricole pour épandre des particules, telles que des engrais ou des semences ;
[Fig 2] présente une courbe représentative de l'évolution du débit de l'écoulement gravitaire de particules à épandre, en sortie d'une trémie, en fonction de la position d'un actionneur pilotant le déplacement de la trappe d'obturation de l'ouverture ménagée dans la trémie, selon les techniques de l'art antérieur ;
[Fig 3] illustre une courbe de pilotage de débit souhaitée, selon un mode de réalisation de l'invention.
[Fig 4] illustre l'évolution mesurée expérimentalement du débit d'écoulement gravitaire Q, exprimé en kg/min, en fonction de l'inclinaison α, exprimée en degrés, par rapport à la verticale, de la paroi de la trémie portant l'ouverture de passage des particules à épandre;
[Fig 5] présente schématiquement un dispositif expérimental utilisé pour l'obtention des résultats de [Fig 4], avec un angle d'inclinaison faible ;
[Fig 6] présente schématiquement un dispositif expérimental utilisé pour l'obtention des résultats de [Fig 4], avec un angle d'inclinaison élevé;
[Fig 7] illustre schématiquement la trappe d'obturation incurvée du dispositif de dosage selon un mode de réalisation de l'invention, dans une position d'ouverture réduite adaptée aux petits débits ;
[Fig 8] illustre schématiquement la trappe d'obturation incurvée du dispositif de dosage selon un mode de réalisation de l'invention, dans une position d'ouverture maximum adaptée aux gros débits ;
[Fig 9] présente six vues correspondant à des positions d'ouverture successives d'un orifice calibré dont la largeur augmente du bas vers le haut, selon un mode de réalisation ;
[Fig 10] illustre une vue d'ensemble en perspective d'un dispositif de dosage selon un premier mode de réalisation de l'invention ;
[Fig 11] propose une vue éclatée du dispositif de dosage de [Fig 10] ;
[Fig 12] offre une vue en perspective de dessus du dispositif de dosage de [Fig 10] ;
[Fig 13] présente une vue éclatée d'un dispositif de dosage selon un deuxième mode de réalisation de l'invention ;
[Fig 14] offre une vue en perspective de dessus du dispositif de dosage de [Fig 13] ;
[Fig 15] présente une vue en perspective d'un dispositif de dosage selon un troisième mode de réalisation de l'invention ;
[Fig 16] illustre le principe d'interchangeabilité des sélecteurs de débit sur un dispositif de dosage selon un mode de réalisation de l'invention ;
[Fig 17] schématise un système de reconnaissance automatique d'un sélecteur de débit monté sur un dispositif de dosage selon un mode de réalisation de l'invention ;
[Fig 18] illustre les différentes courbes de débit associées à différents sélecteurs de débits dans le mode de réalisation de [Fig 16] ;
[Fig 19] présente une vue éclatée d'un dispositif de dosage selon un autre mode de réalisation de l'invention, dans lequel le sélecteur de débit porte deux orifices calibrés différents ;
[Fig 20] présente une vue en perspective du dispositif de dosage de [Fig 19], quand un gros orifice calibré est disposé en regard de l'ouverture ;
[Fig 21] présente une vue en perspective du dispositif de dosage de [Fig 19], quand un petit orifice calibré est disposé en regard de l'ouverture ;
[Fig 22] illustre une vue en perspective d'un dispositif de dosage en position fermée selon un mode de réalisation de l'invention, avec détection de contact entre la trappe et l'ouverture et/ou le sélecteur de débit ;
[Fig 23] illustre le dispositif de dosage de [Fig 22] en position ouverte ;
[Fig 24] illustre le problème possible de débordement des particules à épandre au travers de la trappe ;
[Fig 25] illustre un premier mode de réalisation d'un déflecteur porté par la trappe pour éviter le problème de débordement illustré en [Fig 24] ;
[Fig 26] illustre un second mode de réalisation d'un déflecteur porté par la trappe pour éviter le problème de débordement illustré en [Fig 24] ;
[Fig 27] illustre une autre vue en perspective d'un dispositif de dosage selon l'invention dans lequel la trappe est équipée d'un déflecteur permettant de canaliser le flux de particules, et est en position de libération maximale de l'ouverture ;
[Fig 28] illustre une autre vue en perspective d'un dispositif de dosage selon l'invention dans lequel la trappe est équipée d'un déflecteur permettant de canaliser le flux de particules, et est en position de libération minimale de l'ouverture ;
[Fig 29] illustre sous forme schématique synthétique le principe de fonctionnement d'un dispositif de dosage selon un mode de réalisation de l'invention comprenant un sélecteur de débit interfacé entre le fond et la trappe ;
[Fig 30] illustre sous forme schématique synthétique le principe de fonctionnement d'un dispositif de dosage selon un mode de réalisation conventionnel, sans sélecteur de débit.

### Description détaillée de modes de réalisation de l'invention

Le principe général de l'invention repose sur la mise en œuvre d'une trappe incurvée, mobile en rotation autour d'un axe horizontal, pour obturer l'ouverture ménagée dans le fond doseur d'un dispositif de dosage de particules à épandre. Une telle trappe incurvée permet de faire varier l'angle de la paroi du fond doseur traversé par les particules à épandre, en fonction de son degré d'ouverture ou d'obturation.

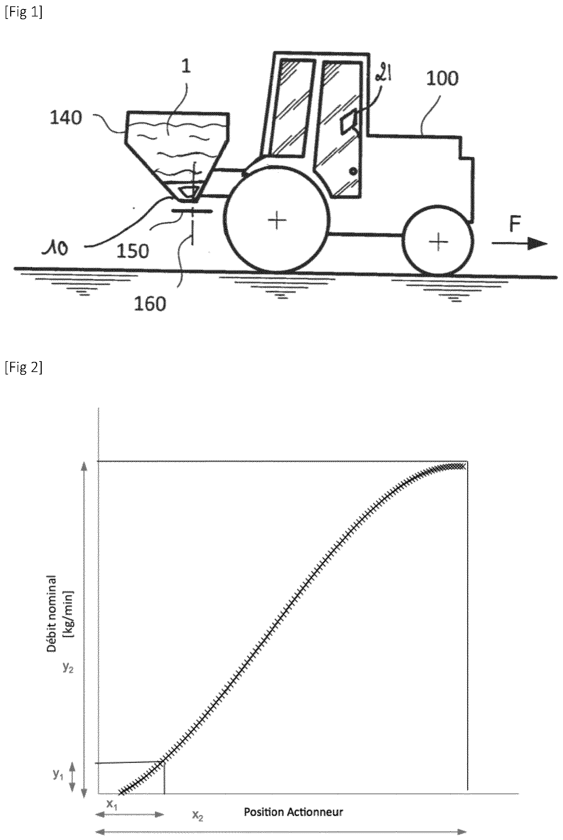

Un tel dispositif de dosage équipe une machine permettant d'épandre de l'engrais solide ou des semis sur une parcelle cultivable, dont un exemple est illustré schématiquement sur [Fig 1]. Elle se présente sous la forme d'un tracteur 100 équipé d'une trémie 1 contenant l'engrais ou les graines 140 à épandre.

Le fond de la trémie 1 comprend deux ouvertures, puis deux dispositifs d'alimentation réglables, puis deux dispositifs de réglage de la distribution de l'engrais se présentant par exemple sous la forme de goulottes, laissant passer des particules contenues 140 dans la trémie 1, et placé en surplomb de deux distributeurs comprenant chacun un disque rotatif 150 portant des pales de projection. Deux dispositifs de dosage 10 équipent le fond de la trémie 1.

Les disques 150 sont le plus souvent disposés dans une position sensiblement horizontale et leur rotation autour d'un axe 160 sensiblement vertical assure la projection du contenu 140 de la trémie par effet centrifuge, sous la forme d'une nappe, en forme générale de croissant, s'étendant à l'arrière de la machine d'épandage.

Un terminal 21, disposé dans la cabine du tracteur 100, permet le pilotage des dispositifs de dosage 10.

On présente désormais, en relation avec [Fig 2], une courbe représentative de l'évolution du débit de l'écoulement gravitaire de particules à épandre, en sortie d'une trémie, en fonction de la position d'un actionneur pilotant le déplacement de la trappe d'obturation de l'ouverture ménagée dans la trémie, selon les techniques de l'art antérieur.

Comme on peut le constater, cette courbe est, au moins dans sa partie médiane, linéaire, et, hormis en début et fin de course de l'actionneur, le débit d'écoulement gravitaire des particules est directement proportionnel au degré d'ouverture de la trappe : ainsi, pour une trappe ouverte à 50% de sa course maximale, le débit est deux fois moindre que pour une trappe ouverte à 100%.

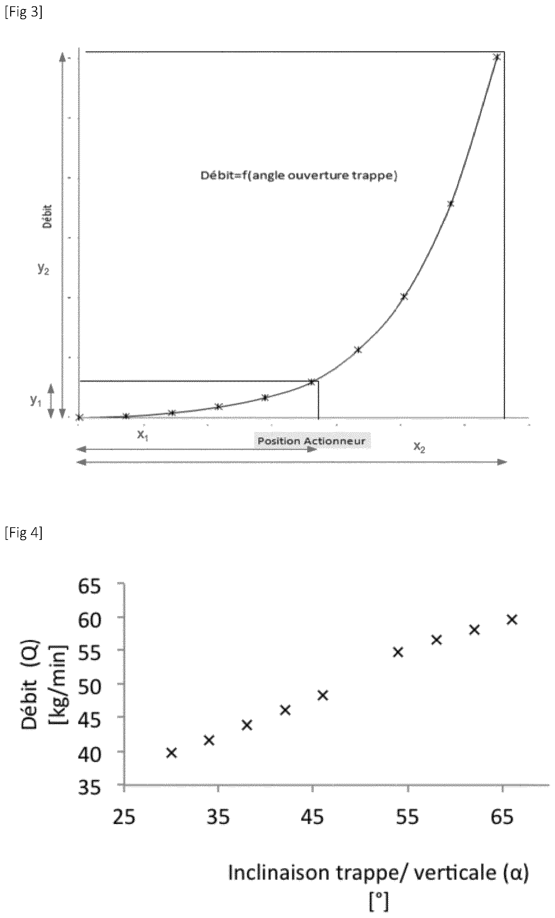

Or, il serait souhaitable d'obtenir une courbe de pilotage du débit sensiblement parabolique, comme illustré par [Fig 3] : en effet, pour plus de précision à faible débit, il serait souhaitable que le débit d'écoulement gravitaire évolue tout d'abord faiblement sur une première partie de la course de la trappe d'obturation, puis plus rapidement sur une deuxième partie de cette dernière.

Un nouvel enjeu de l'agriculture de précision consiste en effet à obtenir de la précision en petit débit avec un dispositif de dosage à écoulement gravitaire.

Or, il a été constaté qu'il existe un seuil d'écoulement granulaire limite pour une ouverture donnée de la trappe d'obturation de la trémie, qui rend difficile l'atteinte de petits débits d'écoulement pour les matériaux granulaires ou pulvérulents.

Ce seuil d'écoulement limite d'un produit granulaire au travers d'un orifice est principalement lié :
- à la dimension et à la géométrie de l'orifice ;
- à la dimension des particules à épandre ;
- à l'angle de talus naturel du produit à épandre (i.e. l'angle que fait, avec le sol, la pente du tas sous lequel s'accumule le produit à épandre, qui est un paramètre caractéristique du comportement mécanique des matériaux granulaires ou pulvérulents).

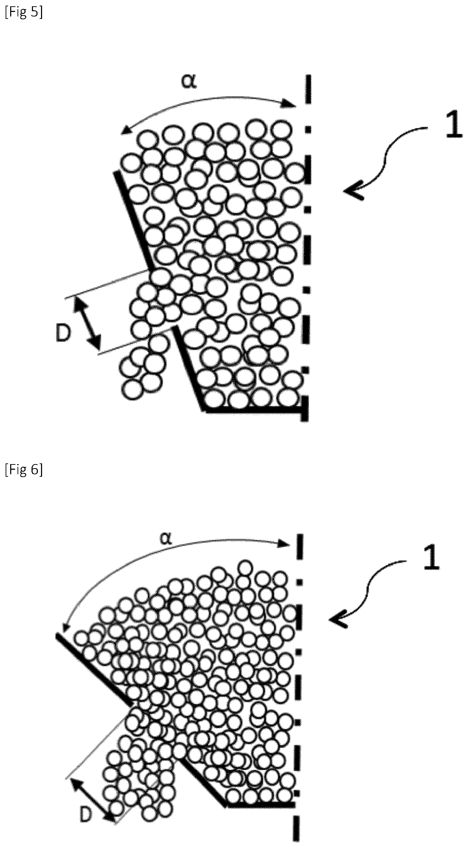

Les inventeurs de la présente demande de brevet ont noté, lors d'essais, qu'il était possible, pour un même produit à épandre, et une même section de l'orifice de passage, de faire varier le débit d'écoulement gravitaire du produit, en fonction de l'angle de la paroi portant l'orifice, que le produit traverse. Ceci est illustré sur les figures [Fig 4], [Fig 5] et [Fig 6]. On considère une section de surface D de l'orifice de passage des particules de l'intérieur vers l'extérieur de la trémie 1. Cette section D est la même sur [Fig 5] et [Fig 6] ; en revanche, ces deux figures diffèrent par l'angle α d'inclinaison par rapport à la verticale de la paroi de la trémie 1 portant l'orifice de section D. Cet angle d'inclinaison α est plus faible sur [Fig 5] que sur [Fig 6]. Comme schématisé sur [Fig 5] et [Fig 6], le débit d'écoulement gravitaire des particules obtenu sur [Fig 5] est plus faible que sur [Fig 6].

Les résultats complets de cette observation sont synthétisés sur [Fig 4], qui illustre l'évolution du débit d'écoulement gravitaire Q, exprimé en kg/min, en fonction de l'inclinaison a, exprimée en degrés, par rapport à la verticale, de la paroi de la trémie portant l'ouverture de passage des particules à épandre. Les résultats de [Fig 4] ont été obtenus expérimentalement pour un engrais de type azoté avec une concentration de 33,5 unités d'azote, appelé ammonitrate 33.5 et un orifice circulaire de diamètre D=55mm.

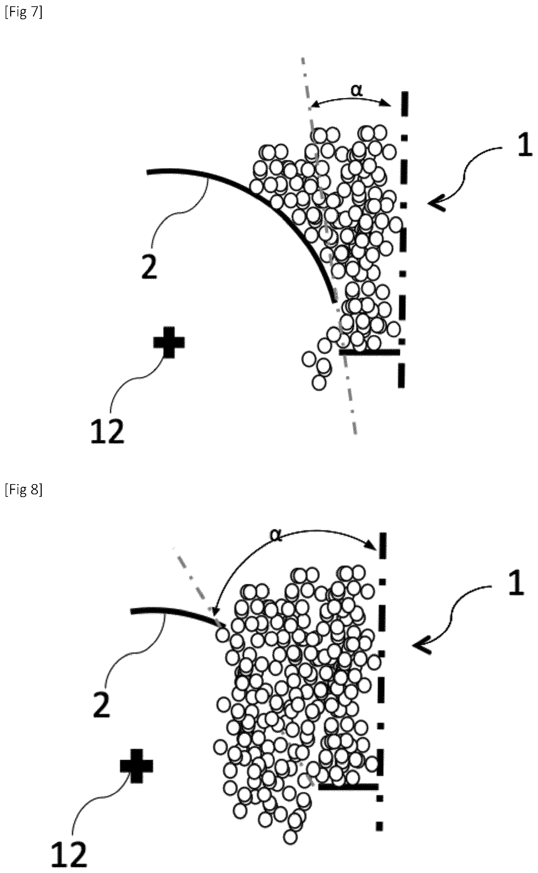

Forts de ces observations, les inventeurs de la présente demande de brevet ont donc conçu et inventé le principe d'obturation par trappe incurvée représenté schématiquement sur les figures [Fig 7] et [Fig 8].

Une trappe incurvée 2 est mobile en rotation autour d'un axe horizontal 12. Cette trappe incurvée 2 peut être cylindrique ou sphérique et vient obturer une ouverture ménagée dans la paroi latérale d'une trémie 1.

Sur [Fig 7], la trappe incurvée 2 se trouve dans une position d'ouverture réduite. L'angle d'inclinaison a, qui correspond à l'angle d'inclinaison moyen de l'ouverture libérée par la trappe incurvée 2 par rapport à la verticale est faible, et correspond sensiblement à celui de [Fig 5]. Dans cette position, le dispositif de dosage est adapté à un débit d'écoulement faible du produit à épandre.

Sur [Fig 8], la trappe incurvée 2 se trouve dans une position d'ouverture maximum. L'angle d'inclinaison a, qui correspond à l'angle d'inclinaison moyen de l'ouverture libérée par la trappe incurvée 2 par rapport à la verticale est élevé, et correspond sensiblement à celui de [Fig 6]. Dans cette position, le dispositif de dosage est adapté à un gros débit d'écoulement du produit à épandre. Ceci est rendu possible par le positionnement particulier de la trappe 2, qui est disposée à l'extérieur du fond, mais dont l'axe de rotation est situé à proximité de l'ouverture, sensiblement à la verticale de la frontière haute de l'ouverture.

Ainsi, l'emploi d'une trappe incurvée 2 permet avantageusement :
- de réduire le débit d'écoulement en position d'ouverture minimum de la trappe, par rapport à l'art antérieur ;
- d'augmenter le débit d'écoulement en position d'ouverture maximum de la trappe, par rapport à l'art antérieur ;
- d'accroître la section de passage du produit à épandre pour un encombrement donné, par rapport à une trappe plane de l'art antérieur ;
- de favoriser un écoulement continu du produit à épandre en petit débit (car la section de l'orifice dégagé par la trappe est suffisante pour un écoulement stable du produit à épandre).

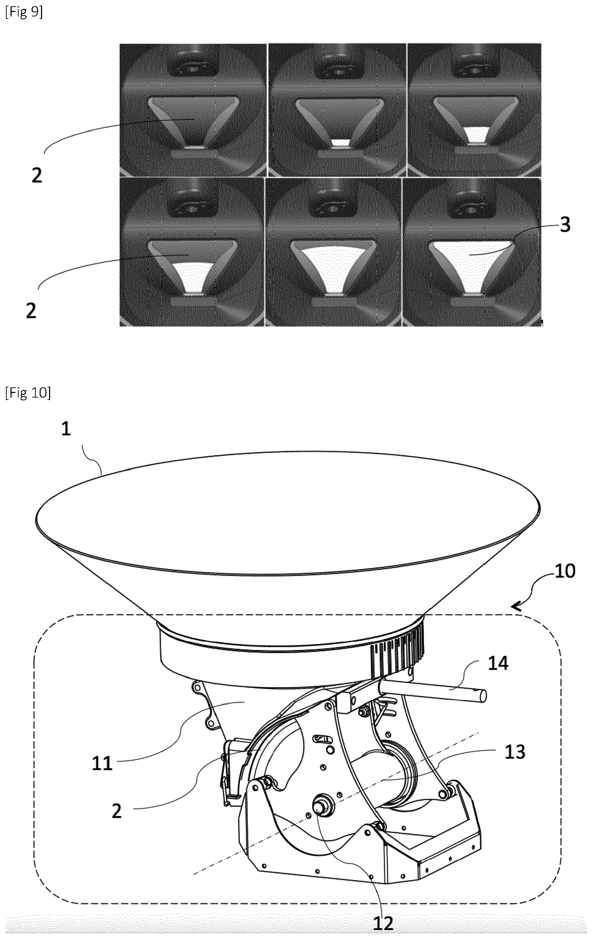

En outre, dans un mode de réalisation du dispositif de dosage de l'invention, l'orifice calibré par lequel s'écoulent les particules à épandre de l'intérieur vers l'extérieur de la trémie présente une largeur augmentant progressivement du bas vers le haut, comme illustré par les six vues de [Fig 9]. Dans la vue en haut à gauche, la trappe incurvée rotative 2 est en position d'obturation totale de l'orifice calibré : elle s'ouvre progressivement en parcourant les vues de gauche à droite, et de haut en bas, jusqu'à la vue en bas à droite, sur laquelle la trappe incurvée 2 est en position de libération totale de l'orifice calibré.

Comme on peut l'observer sur [Fig 9], dans ce mode de réalisation, l'orifice calibré 3 présente une forme sensiblement triangulaire, avec une largeur faible en fond de trémie, et une largeur plus importante dans sa partie supérieure.

En conjuguant le phénomène de modification de l'angle d'inclinaison a, obtenu grâce à l'utilisation d'une trappe incurvée rotative, avec cet agrandissement progressif de la section de passage de l'orifice calibré, on obtient une courbe de pilotage du débit parabolique telle qu'illustrée en [Fig 3].

Les courbes des figures [Fig 2] et [Fig 3] illustrent l'évolution du débit d'écoulement gravitaire d'un produit à épandre, exprimée en kg/min, en fonction de la position d'un actionneur pilotant le déplacement d'une trappe d'obturation de l'ouverture ménagée dans la paroi latérale d'une trémie 1, respectivement pour la solution de l'art antérieur du Demandeur ([Fig 2]) et pour un mode de réalisation d'une trappe incurvée obturant un orifice calibré de forme sensiblement triangulaire ([Fig 3]).

Sur [Fig 2], comme sur [Fig 3], le débit d'écoulement gravitaire maximum qui peut être obtenu est noté y₂ : il est obtenu pour un déplacement maximum x₂ de l'actionneur pilotant la trappe (plane coulissante sur [Fig 2] et incurvée rotative sur [Fig 3]). Un débit faible y₁ peut également être obtenu avec les deux systèmes de trappe ; cependant, ce faible débit est obtenu pour un déplacement de l'actionneur x₁ qui est bien plus faible dans la solution de l'art antérieur de [Fig 2] que dans un mode de réalisation d'une trappe incurvée rotative 2 selon [Fig 3].

Selon ce mode de réalisation, on obtient donc une précision accrue en petit débit, et une bonne réactivité en gros débit. L'alliance de ces deux aptitudes permet de proposer au dispositif de dosage selon un mode de réalisation de l'invention une forte polyvalence.

On présente désormais, en relation avec [Fig 10] une vue d'ensemble en perspective d'un dispositif de dosage 10 selon un mode de réalisation de l'invention.

Un tel dispositif de dosage 10 (identifié par les contours en traits pointillés sur la figure) comprend un fond 11, qui peut être intégré à la trémie, ou y être solidarisé, par exemple par soudure. Dans l'exemple de [Fig 10], un tel fond 11 présente une section sensiblement circulaire, en forme de bol : il peut être réalisé en matériau plastique, ou se présenter sous forme d'un réceptacle en acier. Il est disposé en partie inférieure de la trémie 1.

Dans la partie inférieure du fond 11, une paroi latérale de ce dernier porte une ouverture, par laquelle les particules à épandre peuvent s'écouler de l'intérieur vers l'extérieur de la trémie 1, par exemple pour être déposées sur des disques d'épandage (non représentés).

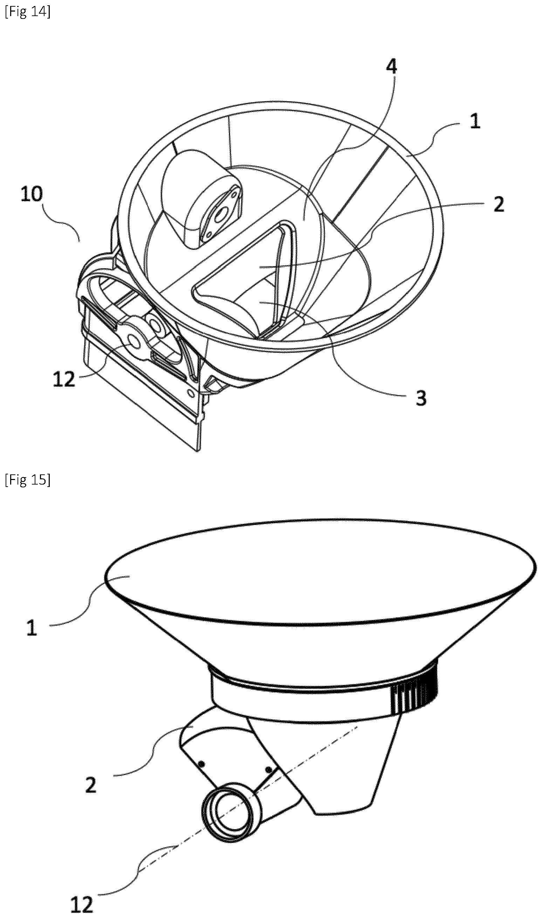

Cette ouverture peut être obturée au moyen d'une trappe incurvée 2, mobile en rotation autour d'un axe 12. La trappe incurvée 2, dans cet exemple, présente une surface correspondant sensiblement à une portion de cylindre. D'autres formes de surfaces de révolution peuvent également être envisagées, par exemple une portion de sphère, comme illustré sur [Fig 15]. La trappe 2 de forme convexe pénètre dans le fond 11 qui présente une ouverture correspondante de forme concave.

Un actionneur 13 de la trappe rotative 2 peut permettre de piloter le déplacement de la trappe 2, d'une position d'obturation maximum de l'ouverture, dans laquelle le débit d'écoulement gravitaire du produit à épandre est nul, vers une position de libération maximale de l'ouverture, dans laquelle le débit d'écoulement gravitaire du produit à épandre est maximum. Un tel actionneur 13 peut prendre la forme d'un moteur, ou d'un vérin.

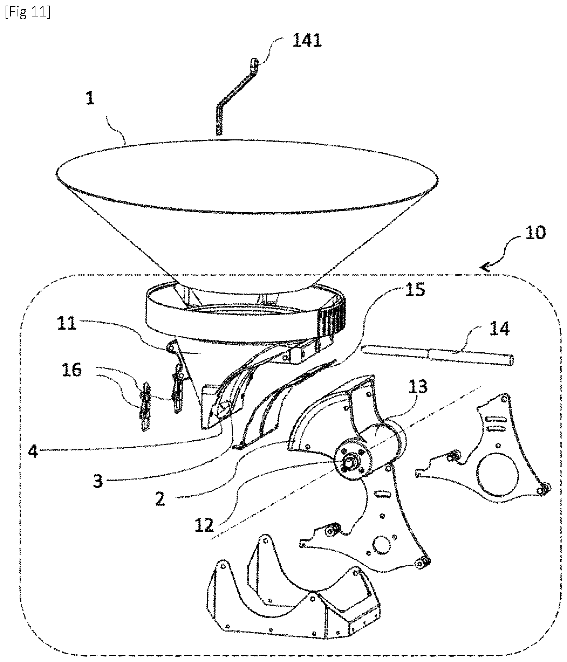

Un arbre horizontal 14 est disposé dans un logement en partie supérieure du fond 11, et est destiné à porter une dent d'agitation, qui pourra être plus aisément observée sur [Fig 11]. Un tel arbre 14, optionnel, est par exemple animé d'un mouvement oscillant, et permet d'agiter le produit à épandre, pour en faciliter l'écoulement gravitaire.

[Fig 11] propose une vue éclatée du dispositif de dosage de [Fig 10], sur laquelle on observe plus clairement l'ouverture 3 ménagée dans la paroi latérale 4 du fond doseur 11.

La trappe incurvée 2, mobile en rotation autour de l'axe 12, et actionnée par le moteur pas à pas 13, libère ou obture, totalement ou partiellement, selon sa position, l'ouverture 3.

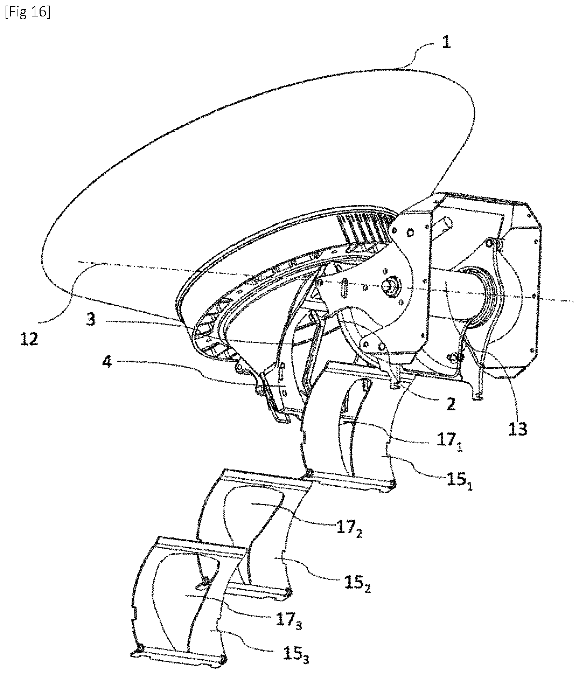

En outre, sur l'exemple de [Fig 11], un sélecteur de débit 15 est interfacé entre l'ouverture 3 et la trappe incurvée 2. Ce sélecteur de débit 15 porte un orifice calibré, au travers duquel passe le produit à épandre, lorsqu'il s'écoule de l'intérieur vers l'extérieur de la trémie 1. Des moyens de fixation amovible 16 sont prévus pour solidariser le sélecteur de débit 15 au fond 11. Il est possible pour l'utilisateur de choisir et d'installer le sélecteur de débit 15 qui correspond au produit qu'il souhaite épandre, comme on le comprendra plus aisément en relation avec [Fig 16].

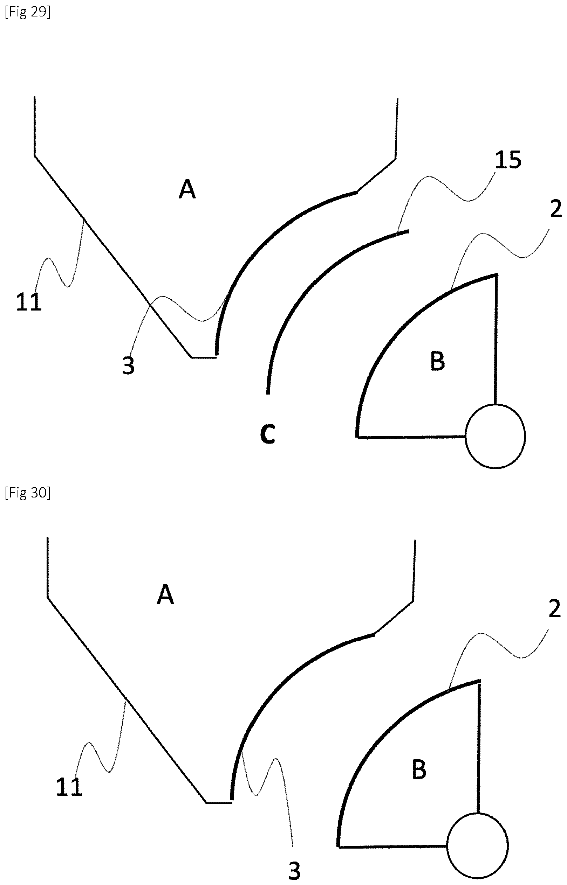

Le principe de fonctionnement d'un tel sélecteur de débit peut être mieux compris au regard des figures [Fig 29] et [Fig 30]. [Fig 29] illustre sous forme schématique un mode de réalisation de l'invention, tandis que [Fig 30] illustre sous forme schématique un mode de réalisation conventionnel, sans sélecteur de débit.

Comme illustré par [Fig 29], le dispositif selon un mode de réalisation de l'invention comprend trois éléments principaux, à savoir :
- un premier élément référencé A comprenant le fond 11 dans la paroi latérale duquel est ménagé une ouverture 3 de forme concave ;
- un deuxième élément référencé B comprenant la trappe 2 de forme convexe, mobile en rotation autour d'un moyeu pour venir épouser la forme concave de l'ouverture 3 du fond ;
- un troisième élément référencé C comprenant un sélecteur de débit 15 dans lequel est ménagé un orifice calibré.

Comme illustré sur la figure [Fig 30], les dispositifs conventionnels, tels que celui décrit dans le document de brevet EP 0 183 292 par exemple, ne comprennent pas ce troisième élément référencé C. Ainsi, le réglage du débit d'écoulement ne s'opère qu'en ajustant la position de la trappe mobile 2, et donc le degré d'obturation de l'ouverture 3 par cette dernière.

La présence, selon un mode de réalisation de l'invention, de cet élément référencé C offre un degré de liberté supplémentaire, qui est particulièrement avantageux pour atteindre de faibles débits d'écoulement, et permettre donc une plus grande polyvalence du dispositif de dosage. En effet, cet élément référencé C, qui vient s'interfacer entre l'ouverture 3 et la trappe 2, est un sélecteur de débit 15 qui porte l'orifice calibré par lequel s'écoule les particules : en fonction de la forme de cet orifice calibré, on peut ajuster plus précisément le débit d'écoulement, en adaptant par exemple la géométrie de cet orifice au type de particules à épandre.

Un tel sélecteur de débit est cependant optionnel. Dans un autre mode de réalisation, l'orifice calibré est directement formé par l'ouverture 3 ménagée dans la paroi latérale 4 du fond doseur 11.

Une dent d'agitation 141, est destinée à être reliée au bras horizontal d'agitation 14, pour réaliser un mouvement d'agitation oscillant des particules à épandre, en partie inférieure du fond 11.

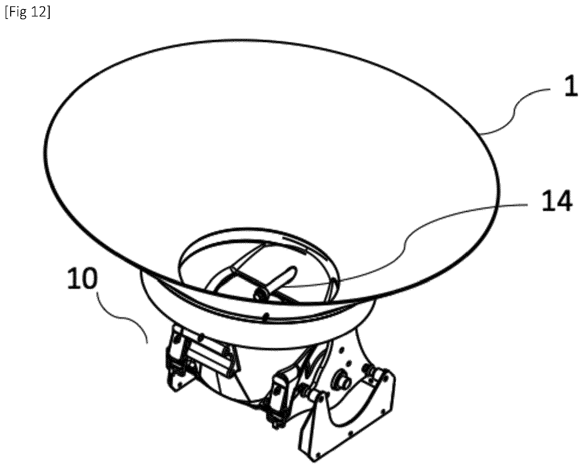

[Fig 12] offre une vue en perspective de dessus du dispositif de dosage de [Fig 10].

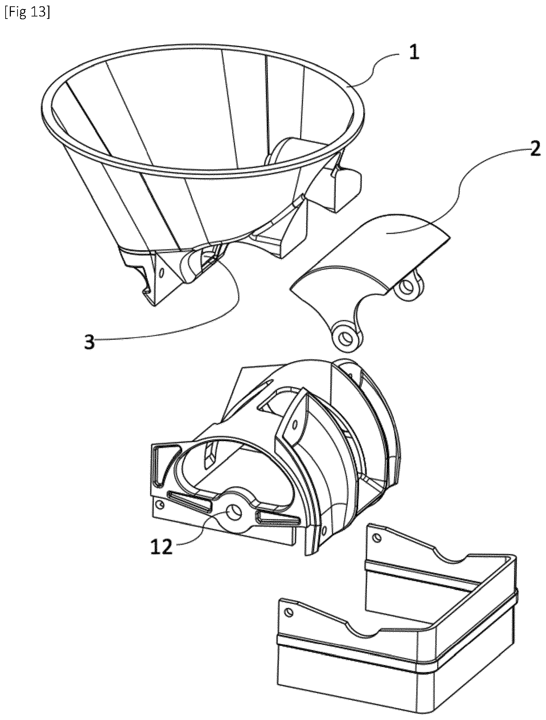

[Fig 13] propose une vue éclatée du dispositif de dosage selon un autre mode de réalisation de l'invention. [Fig 14] offre une vue en perspective de dessus du dispositif de dosage de [Fig 13]. On y observe la trappe incurvée 2, en position d'obturation partielle de l'ouverture 3. On note que, dans cet exemple de réalisation, la paroi 4 dans laquelle est ménagée l'ouverture 3 présente une surface incurvée correspondant sensiblement à la surface de révolution de la trappe 2. Sur l'ensemble des figures, les références numériques désignent les mêmes éléments, et ne sont donc pas décrits ici plus en détail.

[Fig 16] illustre le principe d'interchangeabilité des sélecteurs de débit 15. Sur cette figure, on a représenté, à titre d'exemple, trois sélecteurs de débit distincts référencés 15₁ à 15₃. On peut bien sûr prévoir autant de sélecteurs de débit que nécessaire, en fonction de la gamme de produits à épandre que l'on souhaite utiliser.

Chaque sélecteur de débit 15ᵢ, pour i variant de 1 à 3, porte un orifice calibré 17ᵢ. Dans l'exemple de [Fig 16], tous ces orifices calibrés présentent une largeur augmentant progressivement du bas vers le haut de l'orifice. On pourrait également prévoir des orifices calibrés de largeur constante, par exemple pour les petites particules.

Le débit d'écoulement maximum que le dispositif de dosage permet d'atteindre est fonction de la section de cet orifice calibré 17₁ à 17₃. Ainsi, le sélecteur de débit 15₃ permet d'atteindre un débit maximum plus élevé que le sélecteur de débit 15₂, qui permet lui-même d'atteindre un débit maximum plus élevé que le sélecteur de débit 15₁.

L'ensemble comprenant la trappe 2 et l'actionneur 13 est disposé à l'extérieur du fond 11 et peut pivoter par rapport ce dernier, pour libérer l'accès au sélecteur de débit 15, et faciliter son changement. En outre, un tel ensemble est configuré pour être aisément démontable du dispositif de dosage 1, afin de permettre un nettoyage facile et rapide. Comme exposé ci-avant, chaque sélecteur de débit 15ᵢ, et chaque orifice calibré correspondant 17ᵢ permet d'atteindre une plage de débits d'écoulement des produits à épandre ; en d'autres termes, chaque sélecteur de débit 15ᵢ est associé à une courbe spécifique de débit du type de celle précédemment présentée en [Fig 2].

Il est donc important, en fonction du sélecteur de débit 15ᵢ que l'utilisateur a monté sur le dispositif de dosage 10, que la machine agricole, et plus particulièrement son calculateur, utilise, pour piloter l'épandage, la courbe de débit adéquate, associée au sélecteur de débit 15ᵢ. Cette sélection peut être opérée manuellement par l'utilisateur : par exemple l'utilisateur sélectionne manuellement dans un menu du boîtier de pilotage électronique de la machine quelle courbe de débit la machine doit utiliser. Cette sélection peut être facilitée en apposant une distinction visuelle sur les différents sélecteurs de débit, par exemple un marquage de couleur permettant aisément à l'utilisateur d'identifier la courbe de débit, en fonction de la couleur du sélecteur qu'il a installé.

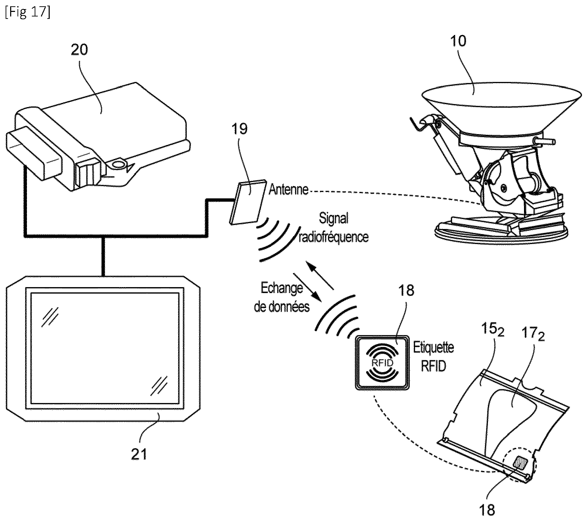

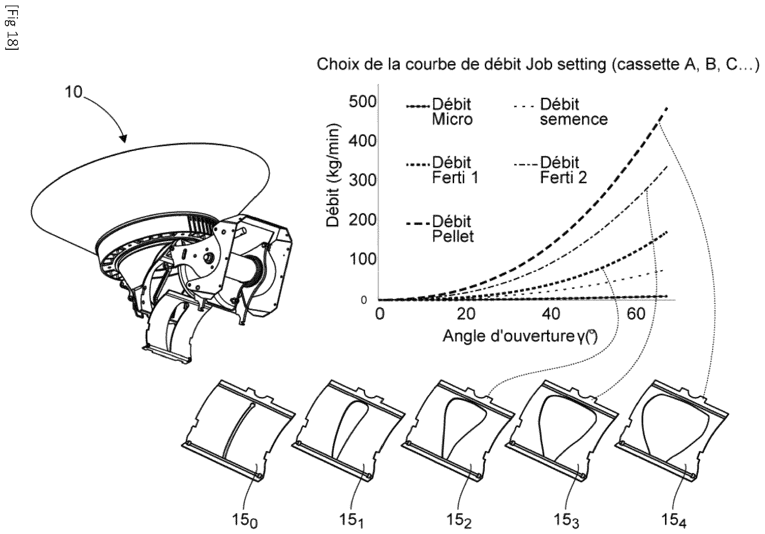

Le risque d'erreur est cependant élevé. Dans un mode de réalisation, on propose donc un système de reconnaissance automatique du sélecteur de débit 15 monté sur le dispositif de dosage 10, pour faciliter son utilisation et limiter le risque d'erreur. Ce système est illustré schématiquement sur les figures [Fig 17] et [Fig 18].

Sur [Fig 17], on a représenté le sélecteur de débit 15₂, qui porte un orifice calibré 17₂. Une étiquette radiofréquence passive de type RFID 18 est apposée sur le sélecteur de débit 15₂.

De telles étiquettes stockent en mémoire un code, qui peut prendre la forme d'un identifiant. Elles ne nécessitent pas d'alimentation électrique, mais utilisent l'énergie des signaux électromagnétiques reçus d'un module de lecture d'étiquettes pour émettre le code ou l'identifiant qu'elles contiennent.

Une antenne active 19 est disposée sur le boîtier électronique 20 de pilotage de la machine agricole. L'antenne 19 joue ce rôle de module de lecture d'étiquettes et émet des signaux radiofréquence vers l'étiquette RFID 18 : cette dernière émet l'identifiant qu'elle contient, ce qui permet à l'antenne 19 de recevoir une information d'identification du sélecteur de débit 15₂ qui a été installé sur le dispositif de dosage 10. Fort de cette information d'identification, le logiciel de pilotage du calculateur de la machine agricole peut sélectionner automatiquement la courbe de débit associée, et afficher les informations correspondantes sur l'écran du terminal 21 disposé dans la cabine de la machine agricole. Un tel logiciel forme ainsi module de sélection d'un mode de pilotage de la machine adapté à l'orifice calibré identifié par le module de lecture d'étiquettes 19.

On notera que, dans l'ensemble de ce document, le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions.

Comme illustré par [Fig 18], le calculateur de la machine agricole mémorise autant de courbes de débit qu'il existe de sélecteurs de débit 15ᵢ disponibles pour le dispositif de dosage 10.

Par exemple, le sélecteur de débit référencé 15₀, qui présente un orifice calibré 17₀ de largeur faible et constante sur toute sa hauteur permet d'obtenir des micro-débits ; le sélecteur de débit 15₁ est particulièrement adapté pour les semences, et permet d'atteindre, en position de libération maximale de l'ouverture 3, un débit de l'ordre de 60kg/min. Les sélecteurs de débit 15₂ et 15₃ sont conçus pour l'épandage de produits fertilisants ; enfin, le sélecteur de débit 15₄, qui présente l'orifice calibré 17₄ de section maximale, est adaptée pour l'épandage de produits organiques sous forme de pellets, et permet d'atteindre des débits de l'ordre de 500kg/min.

En variante, l'étiquette RFID 18 pourrait par exemple être remplacée par un une pièce métallique ou un aimant associés à un capteur magnétique, disposé sur le dispositif de dosage 10.

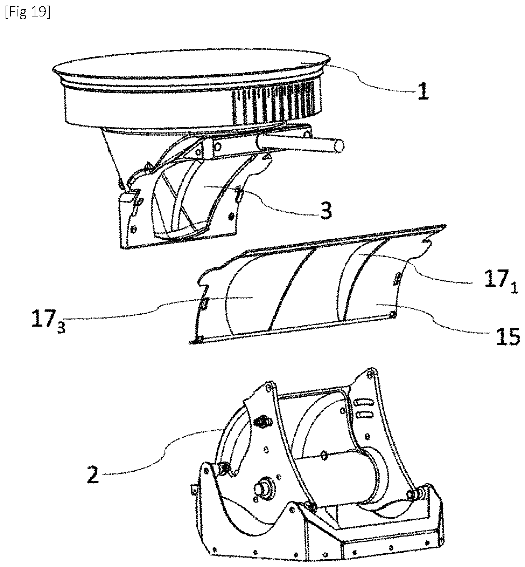

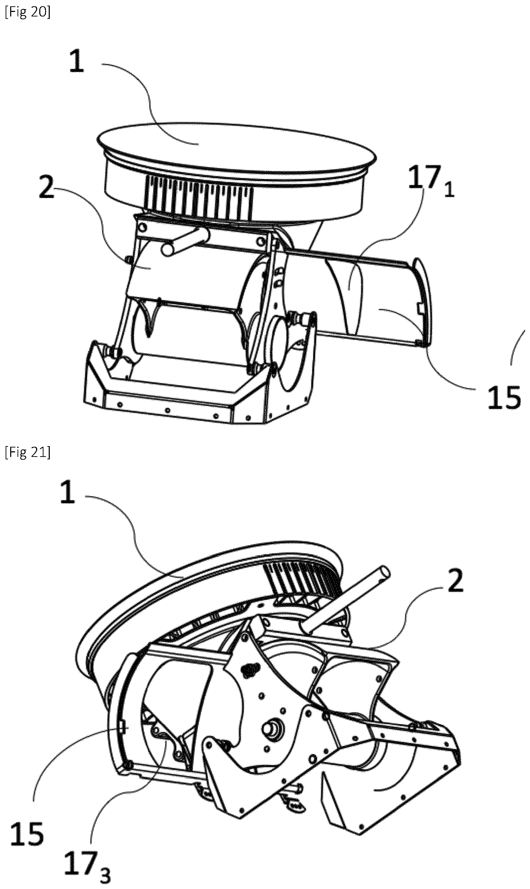

[Fig 19], [Fig 20] et [Fig 21] illustrent une variante de réalisation, dans laquelle un même sélecteur de débit 15 porte plusieurs orifices calibrés, en l'espèce deux orifices calibrés référencés 17₁ et 17₃. Dans ce mode de réalisation, le sélecteur de débit 15 peut coulisser en regard de l'ouverture 3, de façon à placer l'orifice calibré approprié à l'utilisation visée par le client en regard de l'ouverture de passage des particules à épandre.

Ainsi, [Fig 20] illustre une position du sélecteur de débit 15 dans laquelle le plus grand orifice calibré 17₃ est placé en vis-à-vis de l'ouverture de fond de trémie ; [Fig 21] illustre une position du sélecteur de débit 15 dans laquelle le plus petit orifice calibré 17₁ est placé en vis-à-vis de l'ouverture de fond de trémie. Sur ces deux figures, la trappe 2 est en position d'ouverture maximale.

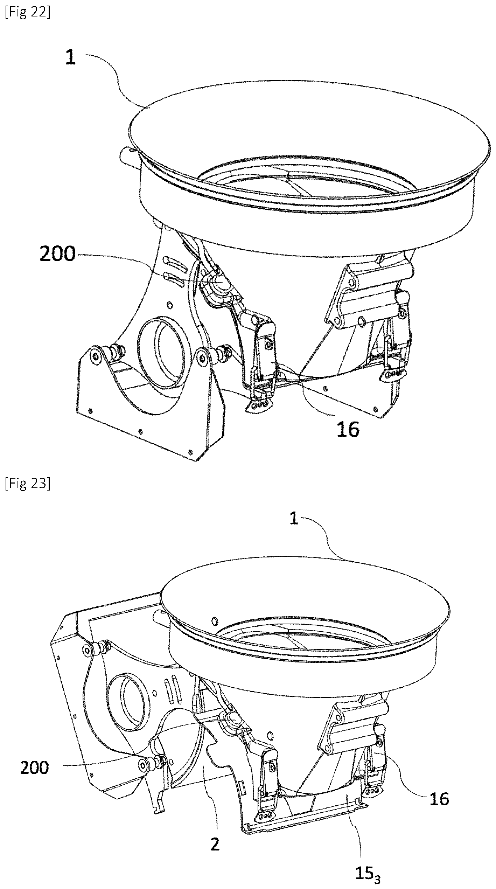

[Fig 22] et [Fig 23] illustrent quant à elle la présence d'un détecteur de contact 200, permettant de détecter si la trappe 2 est ou non en contact avec le sélecteur de débit 15 ou le fond de la trémie. [Fig 22] illustre le dispositif de dosage dans une position de fonctionnement, dans laquelle la trappe est en contact avec le fond de la trémie. [Fig 23] illustre le dispositif de dosage dans une position de nettoyage, de maintenance, ou lorsque l'utilisateur souhaite changer le sélecteur de débit : le détecteur de contact 200 détecte l'absence de contact entre la trappe 2 et le fond de la trémie ou le sélecteur, et transmet cette information jusqu'au boîtier de pilotage du dispositif de dosage, qui génère en réponse une commande d'arrêt de l'actionneur rotatif.

Il est ainsi possible de passer en mode sécurité, et d'arrêter tout déplacement de la trappe incurvée rotative, dès que l'on détecte que le fond doseur est ouvert. On réduit ainsi les risques d'accident lors des interventions de l'utilisateur, par exemple pour les opérations de nettoyage ou de maintenance.

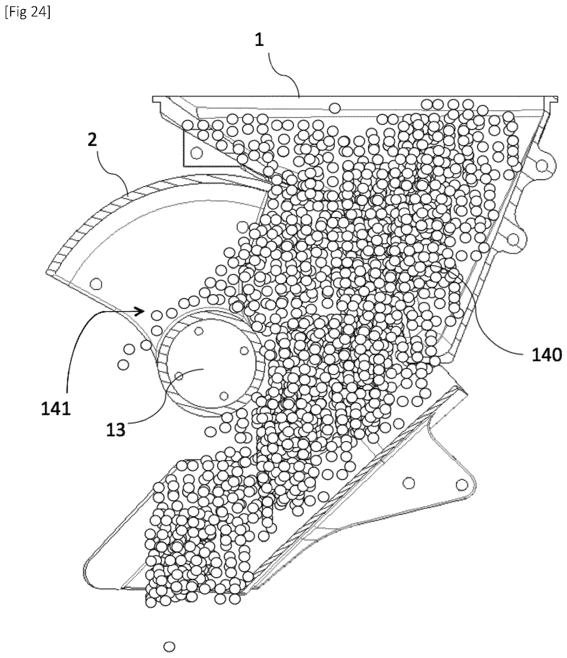

[Fig 24] illustre le problème possible de débordement des particules à épandre 140 au travers de la trappe 2, notamment lorsque le débit d'écoulement gravitaire des particules est élevé, ou en cas de pente ou de dévers. Comme on peut le constater sur [Fig 24], une partie 141 des particules à épandre peut déborder au travers du mécanisme de la trappe 2, entre l'actionneur rotatif 13 et la partie supérieure incurvée de la trappe, au lieu de s'écouler au travers de l'orifice calibré, vers le point de dépose des particules sur les disques d'épandage.

Pour éviter cet inconvénient, il est possible de prévoir un déflecteur sur le mécanisme de la trappe 2, qui va permettre de canaliser le passage des particules à épandre 140 au travers de l'orifice calibré, et éviter qu'elles ne passent entre l'axe de rotation de la trappe et la trappe elle-même.

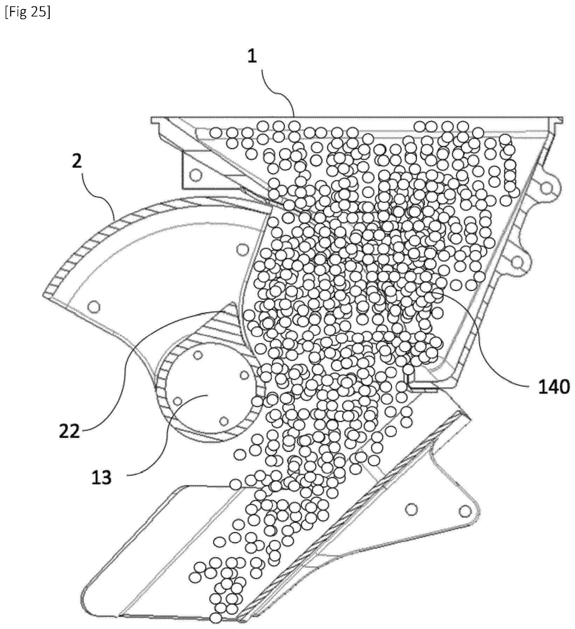

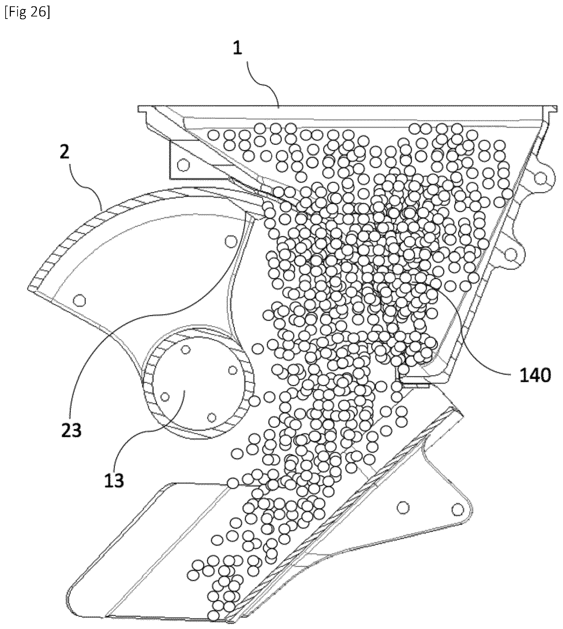

Un tel déflecteur peut consister en une pièce rapportée sur la trappe, ou résulter de la forme de la trappe elle-même. [Fig 25] et [Fig 26] illustrent deux exemples de réalisation d'un tel déflecteur. Sur [Fig 25], un déflecteur 22 est formé au niveau du moyeu central de la trappe, et canalise les particules à épandre 140 vers la goulotte, au travers de l'orifice calibré. Sur [Fig 26], un déflecteur 23 est porté par la partie inférieure de la surface incurvée de la trappe 2.

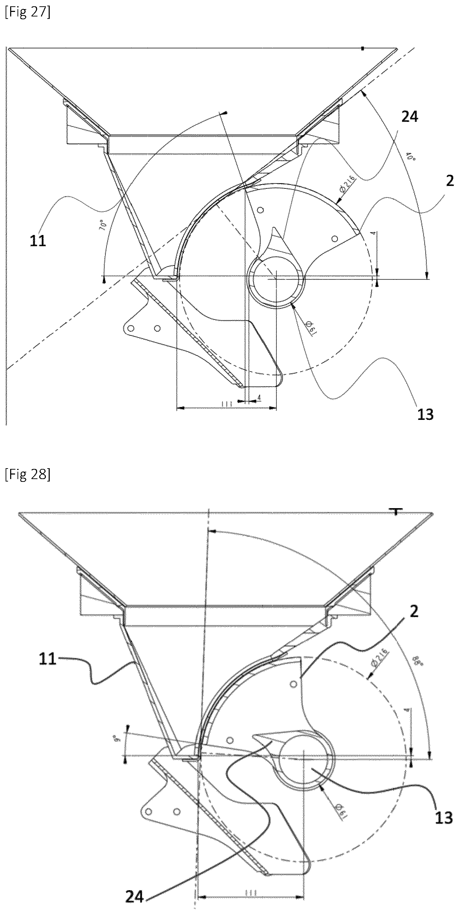

[Fig 27] illustre un autre mode de réalisation d'un dispositif de dosage dans lequel la trappe 2 est pourvue d'un déflecteur 24, qui permet de canaliser le flux de produit.

Sur cette figure, la trappe 2 est en position de libération maximale de l'ouverture ménagée dans la paroi latérale du fond 11. L'axe du moyeu 13 du boisseau 2 est disposé à l'horizontale d'une frontière basse de l'ouverture (distance cotée 111), et sensiblement à la verticale d'une frontière haute de l'ouverture (distance cotée 4 entre la frontière haute de l'ouverture et le bord du moyeu central). On notera que la trappe mobile peut ainsi se déplacer selon un débattement angulaire de 70°, entre sa position d'obturation de l'ouverture, et la position de libération maximale de cette dernière. Dans cette position d'ouverture maximale, l'angle formé par la tangente à la frontière haute de l'ouverture de passage des particules par rapport à l'horizontale est de sensiblement 40°. La surface normale au flux d'écoulement gravitaire des particules est donc sensiblement horizontale, ce qui permet de maximiser le débit et la réactivité. Cette position particulière de la trappe mobile, à l'extérieur du fond 11, mais à proximité de l'ouverture, couplée à la présence du déflecteur 24, permet de ne pas perturber l'écoulement de particules, mais au contraire de le canaliser.

[Fig 28] illustre ce mode de réalisation du dispositif de dosage, quand la trappe 2 est en position de libération minimale de l'ouverture ménagée dans la paroi latérale du fond. Dans cette position d'ouverture minimale, l'angle formé par la tangente à la frontière haute de l'ouverture de passage des particules par rapport à l'horizontale est de sensiblement 90° (88° sur la figure). La surface normale au flux d'écoulement gravitaire des particules est donc sensiblement verticale, ce qui permet de minimiser le débit, en abaissant le seuil d'écoulement minimal.

Ainsi, le boisseau rotatif selon les différents modes de réalisation de l'invention remplit une double fonction :
- d'obturation de l'ouverture ménagée dans la paroi latérale du fond ;
- de canalisation du produit, pour assurer un débit suffisant, grâce à la présence d'un déflecteur d'une part, et à la géométrie particulière du boisseau convexe disposé dans le fond concave, dont l'axe de rotation est à proximité des frontières de l'ouverture.

## Revendications

1. Dispositif (10) de dosage de particules à épandre pour machine agricole, comprenant un fond (11) destiné à former partie inférieure d'une trémie (1) de stockage desdites particules de ladite machine agricole,
**caractérisé en ce que** ledit fond (11) comprend une paroi latérale (4) présentant au moins une ouverture (3) destinée au passage desdites particules à épandre au travers d'au moins un orifice calibré (17), **et en ce qu'**une trappe incurvée (2) est mobile en rotation autour d'un axe (12) sensiblement horizontal entre une position d'obturation de ladite au moins une ouverture et une position de libération maximale de ladite au moins une ouverture, **et en ce que** ledit axe (12) est disposé à l'extérieur dudit fond et de ladite trémie.

2. Dispositif de dosage selon la revendication 1, **caractérisé en ce que** ledit axe (12) est disposé sensiblement à la verticale d'une frontière haute de ladite ouverture.

3. Dispositif de dosage selon l'une quelconque des revendications 1 et 2, **caractérisé en ce que** ledit axe (12) est disposé sensiblement à l'horizontale d'une frontière basse de ladite ouverture.

4. Dispositif de dosage selon l'une quelconque des revendications 1 et 2, **caractérisé en ce que** ladite trappe porte un déflecteur (22, 23) apte à canaliser le passage desdites particules à épandre (140) au travers dudit au moins un orifice calibré.

5. Dispositif de dosage selon l'une quelconque des revendications 1 à 4, **caractérisé en ce que** ladite trappe se déplace entre ladite position d'obturation et ladite position de libération maximale sur une plage angulaire d'au moins 65°.

6. Dispositif de dosage selon l'une quelconque des revendications 1 à 5, **caractérisé en ce que** l'un au moins desdits orifices calibrés (17ᵢ) présente une largeur variant progressivement.

7. Dispositif de dosage selon l'une quelconque des revendications 1 à 6, **caractérisé en ce qu'il** comprend un sélecteur de débit (15ᵢ) formant interface entre ladite ouverture (3) et ladite trappe (2), et portant ledit au moins un orifice calibré (17ᵢ).

8. Dispositif de dosage selon la revendication 7, **caractérisé en ce qu'il** comprend des moyens (16) de fixation amovible dudit sélecteur de débit (15).

9. Dispositif de dosage selon l'une quelconque des revendications 7 et 8, **caractérisé en ce qu'**au moins deux sélecteurs de débit (15₁, 15₂, 15₃), présentant des orifices calibrés (17₁, 17₂, 17₃) différents, sont disponibles et peuvent être interchangés.

10. Dispositif de dosage selon l'une quelconque des revendications 7 à 9, **caractérisé en ce que** ledit sélecteur de débit porte au moins deux orifices calibrés différents **et en ce qu'**il est monté mobile par rapport à ladite ouverture entre une première position dans laquelle un premier orifice calibré est en regard de ladite ouverture et au moins une deuxième position dans laquelle un deuxième orifice calibré est en regard de ladite ouverture.

11. Dispositif de dosage selon l'une quelconque des revendications 7 à 10, **caractérisé en ce que** ledit sélecteur de débit (15ᵢ) porte au moins un marqueur d'identification (18) dudit orifice calibré (17ᵢ).

12. Dispositif de dosage selon l'une quelconque des revendications 1 à 11, **caractérisé en ce qu'**un actionneur rotatif (13) pilote le passage de ladite trappe (2) de ladite position d'obturation à ladite position de libération maximale et inversement.

13. Dispositif de dosage selon la revendication 12, **caractérisé en ce que** ladite trappe (2) et ledit actionneur rotatif (13) sont disposés à l'extérieur dudit fond (11).

14. Dispositif de dosage selon l'une quelconque des revendications 1 à 13, **caractérisé en ce que** ladite trappe incurvée (2) présente une surface définissant sensiblement une portion d'une surface de révolution autour dudit axe horizontal (12).

15. Dispositif de dosage selon la revendication 14, **caractérisé en ce que** ladite paroi latérale (4) présente, dans une zone portant ladite ouverture (3), une surface complémentaire à ladite surface de révolution de ladite trappe (2).

16. Dispositif de dosage selon l'une quelconque des revendications 12 à 15, **caractérisé en ce qu'**il comprend un module de détection de contact entre ladite trappe et ladite ouverture et/ou ledit sélecteur de débit, et un module d'émission d'une commande d'arrêt dudit actionneur rotatif en cas d'absence de contact détectée.

17. Machine agricole pour l'épandage ou le semis de particules, comprenant une trémie (1) de stockage desdites particules, **caractérisée en ce qu'**elle comprend un dispositif de dosage (10) selon l'une quelconque des revendications 1 à 14, disposé en partie inférieure de ladite trémie.

18. Machine agricole selon la revendication 17, comprenant un dispositif de dosage (10) selon la revendication 7, **caractérisée en ce qu'**elle comprend un module (19) de lecture dudit marqueur (18) d'identification de l'orifice calibré et un module de sélection (20) d'un mode de pilotage de ladite machine adapté audit orifice calibré identifié.

## Patentansprüche

1. Vorrichtung (10) zur Dosierung von zu verteilenden Partikeln für eine landwirtschaftliche Maschine, die einen Boden (11) beinhaltet, der dazu bestimmt ist, den unteren Teil eines Vorratstrichters (1) für die Partikel der landwirtschaftlichen Maschine zu bilden,
**dadurch gekennzeichnet, dass** der Boden (11) eine Seitenwand (4) beinhaltet, die mindestens einen Durchgang (3) aufweist, der für den Durchlass der zu verteilenden Partikel durch mindestens eine kalibrierte Öffnung (17) hindurch bestimmt ist, **und dass** eine gekrümmte Klappe (2) um eine im Wesentlichen horizontale Achse (12) zwischen einer Verschlussstellung des mindestens einen Durchgangs und einer maximalen Freigabestellung des mindestens einen Durchgangs drehbeweglich ist **und dass** die Achse (12) außerhalb des Bodens und des Trichters angeordnet ist.

2. Dosiervorrichtung nach Anspruch 1, **dadurch gekennzeichnet, dass** die Achse (12) zu einer oberen Grenze des Durchgangs im Wesentlichen senkrecht angeordnet ist.

3. Dosiervorrichtung nach einem der Ansprüche 1 und 2, **dadurch gekennzeichnet, dass** die Achse (12) zu einer unteren Grenze des Durchgangs im Wesentlichen horizontal angeordnet ist.

4. Dosiervorrichtung nach einem der Ansprüche 1 und 2, **dadurch gekennzeichnet, dass** die Klappe eine Leiteinrichtung (22, 23) enthält, die dazu fähig ist, den Durchlass der zu verteilenden Partikel (140) durch die mindestens eine kalibrierte Öffnung hindurch zu lenken.

5. Dosiervorrichtung nach einem der Ansprüche 1 bis 4, **dadurch gekennzeichnet, dass** sich die Klappe zwischen der Verschlussstellung und der maximalen Freigabestellung über einen Winkelbereich von mindestens 65° bewegt.

6. Dosiervorrichtung nach einem der Ansprüche 1 bis 5, **dadurch gekennzeichnet, dass** mindestens eine der kalibrierten Öffnungen (17ᵢ) eine sich progressiv verändernde Breite aufweist.

7. Dosiervorrichtung nach einem der Ansprüche 1 bis 6, **dadurch gekennzeichnet, dass** sie ein Durchsatzauswahlelement (15ᵢ) beinhaltet, das die Schnittstelle zwischen dem Durchgang (3) und der Klappe (2) bildet und die mindestens eine kalibrierte Öffnung (17ᵢ) enthält.

8. Dosiervorrichtung nach Anspruch 7, **dadurch gekennzeichnet, dass** sie Mittel (16) zur lösbaren Befestigung des Durchsatzauswahlelements (15) beinhaltet.

9. Dosiervorrichtung nach einem der Ansprüche 7 und 8, **dadurch gekennzeichnet, dass** mindestens zwei Durchsatzauswahlelemente (15₁, 15₂, 15₃), die unterschiedliche kalibrierte Öffnungen (17₁, 17₂, 17₃) aufweisen, verfügbar und untereinander austauschbar sind.

10. Dosiervorrichtung nach einem der Ansprüche 7 bis 9, **dadurch gekennzeichnet, dass** das Durchsatzauswahlelement mindestens zwei unterschiedliche kalibrierte Öffnungen enthält **und dass** es in Bezug auf den Durchgang zwischen einer ersten Position, in der sich eine erste kalibrierte Öffnung gegenüber dem Durchgang befindet, und mindestens einer zweiten Position, in der sich eine zweite kalibrierte Öffnung gegenüber dem Durchgang befindet, beweglich montiert ist.

11. Dosiervorrichtung nach einem der Ansprüche 7 bis 10, **dadurch gekennzeichnet, dass** das Durchsatzauswahlelement (15ᵢ) mindestens eine Identifikationsmarkierung (18) der kalibrierten Öffnung (17ᵢ) enthält.

12. Dosiervorrichtung nach einem der Ansprüche 1 bis 11, **dadurch gekennzeichnet, dass** ein Drehantrieb (13) das Verschieben der Klappe (2) von der Verschlussstellung in die maximale Freigabestellung und umgekehrt steuert.

13. Dosiervorrichtung nach Anspruch 12, **dadurch gekennzeichnet, dass** die Klappe (2) und der Drehantrieb (13) außerhalb des Bodens (11) angeordnet sind.

14. Dosiervorrichtung nach einem der Ansprüche 1 bis 13, **dadurch gekennzeichnet, dass** die gekrümmte Klappe (2) eine Oberfläche aufweist, die im Wesentlichen einen Abschnitt einer Rotationsfläche um die horizontale Achse (12) definiert.

15. Dosiervorrichtung nach Anspruch 14, **dadurch gekennzeichnet, dass** die Seitenwand (4) in einem Bereich, der den Durchgang (3) enthält, eine zu der Rotationsfläche der Klappe (2) komplementäre Oberfläche aufweist.

16. Dosiervorrichtung nach einem der Ansprüche 12 bis 15, **dadurch gekennzeichnet, dass** sie ein Modul zur Erfassung des Kontakts zwischen der Klappe und dem Durchgang und/oder dem Durchsatzauswahlelement und ein Modul zur Ausgabe eines Stoppbefehls für den Drehantrieb, wenn kein Kontakt erfasst wird, beinhaltet.

17. Landwirtschaftliche Maschine für die Verteilung oder die Aussaat von Partikeln, die einen Vorratstrichter (1) für die Partikel beinhaltet, **dadurch gekennzeichnet, dass** sie eine Dosiervorrichtung (10) nach einem der Ansprüche 1 bis 14 beinhaltet, die im unteren Teil des Trichters angeordnet ist.

18. Landwirtschaftliche Maschine nach Anspruch 17, die eine Dosiervorrichtung (10) nach Anspruch 7 beinhaltet, **dadurch gekennzeichnet, dass** sie ein Modul (19) zum Auslesen der Identifikationsmarkierung (18) der kalibrierten Öffnung und ein Modul zum Auswählen (20) eines Steuermodus für die Maschine, der für die identifizierte kalibrierte Öffnung geeignet ist, beinhaltet.

## Claims

1. Device (10) for metering particles to be spread for an agricultural machine,
comprising a base (11) which is intended to form a lower portion of a hopper (1) for storing said particles of said agricultural machine,
**characterised in that** said base (11) comprises a lateral wall (4) which has at least one opening (3) which is intended for the passage of the particles to be spread through at least one calibrated hole (17), and **in that** a curved hatch (2) can be moved in rotation about a substantially horizontal axis (12) between a position for closing said at least one opening and a position for maximum release of said at least one opening, and **in that** said axis (12) is arranged outside said base and said hopper.

2. Metering device according to claim 1, **characterised in that** said axis (12) is arranged substantially vertically relative to an upper boundary of said opening.

3. Metering device according to either claim 1 or 2, **characterised in that** said axis (12) is arranged substantially horizontally relative to a lower boundary of said opening.

4. Metering device according to either claim 1 or 2, **characterised in that** said hatch carries a deflector (22, 23) which is capable of channelling the passage of the particles to be spread (140) through said at least one calibrated hole.

5. Metering device according to any one of claims 1 to 4, **characterised in that** said hatch moves between said closing position and said position of maximum release over an angular range of at least 65°.

6. Metering device according to any one of claims 1 to 5, **characterised in that** at least one of said calibrated holes (17ᵢ) has a width which varies progressively.

7. Metering device according to any one of claims 1 to 6, **characterised in that** it comprises a flow rate selector (15ᵢ) which forms an interface between said opening (3) and said hatch (2) and which carries said at least one calibrated hole (17i) .

8. Metering device according to claim 7, **characterised in that** it comprises means (16) for removably fixing said flow rate selector (15).

9. Metering device according to either claim 7 or 8, **characterised in that** at least two flow rate selectors (15₁, 15₂, 15₃) which have different calibrated holes (17₁, 17₂, 17₃) are available and can be interchanged.

10. Metering device according to any one of claims 7 to 9, **characterised in that** said flow rate selector carries at least two different calibrated holes and **in that** it is movably mounted relative to said opening between a first position, in which a first calibrated hole is opposite the opening, and at least one second position, in which a second calibrated hole is opposite the opening.

11. Metering device according to any one of claims 7 to 10, **characterised in that** said flow rate selector (15ᵢ) carries at least one identification marker (18) of the calibrated hole (17ᵢ).

12. Metering device according to any one of claims 1 to 11, **characterised in that** a rotating actuator (13) controls the movement of said hatch (2) from the closing position to the position of maximum release, and vice versa.

13. Metering device according to claim 12, **characterised in that** said hatch (2) and said rotating actuator (13) are arranged outside the base (11).

14. Metering device according to any one of claims 1 to 13, **characterised in that** said curved hatch (2) has a surface which substantially defines a portion of a surface generated by revolution about the horizontal axis (12).

15. Metering device according to claim 14, **characterised in that** said lateral wall (4) has, in a zone which carries said opening (3), a surface which complements the surface of the hatch (2) generated by revolution.

16. Metering device according to any one of claims 12 to 15, **characterised in that** it comprises a module for detecting contact between said hatch and said opening and/or said flow rate selector, and a module for transmitting a command for stopping said rotating actuator in the event of absence of contact being detected.

17. Agricultural machine for spreading or sowing particles, comprising a hopper (1) for storing said particles, **characterised in that** it comprises a metering device (10) according to any one of claims 1 to 14, arranged in the lower portion of the hopper.

18. Agricultural machine according to claim 17, comprising a metering device (10) according to claim 7, **characterised in that** it comprises a module (19) for reading the identification marker (18) of the calibrated hole and a module (20) for selecting a control mode of the machine adapted to the calibrated hole identified.
